# EUROPÄISCHE PATENTSCHRIFT

(11) **EP 3 375 737 B1**
(45) Veröffentlichungstag und Bekanntmachung des Hinweises auf die Patenterteilung: **18.05.2022**
(21) Anmeldenummer: 18155927.9
(22) Anmeldetag: 09.02.2018
(51) Int. Cl.: B65G 19/02, B65B 35/30, B65G 47/244, B65G 47/71, B65B 59/04, B65G 47/64, B65B 53/02

(54) **TRANSPORTABSCHNITT UND VERFAHREN ZUM EINSTELLEN UND/ODER VERSTELLEN MINDESTENS EINER TRANSPORTBAHN INNERHALB EINES TRANSPORTABSCHNITTS**
TRANSPORT SECTION AND METHOD FOR ADJUSTING AND/OR ADJUSTING AT LEAST ONE TRANSPORT LINE WITHIN A TRANSPORT SECTION
SECTION DE TRANSPORT ET PROCÉDÉ DE RÉGLAGE ET/OU DE POSITIONNEMENT D'AU MOINS UN RAIL DE TRANSPORT À L'INTÉRIEUR D'UNE SECTION DE TRANSPORT

(30) Priorität: 14.03.2017 DE 102017204217
(43) Veröffentlichungstag der Anmeldung: 19.09.2018
(73) Patentinhaber: KRONES Aktiengesellschaft, 93073 Neutraubling (DE)
(72) Erfinder: SPINDLER, Herbert, 93073 Neutraubling (DE); KIRZINGER, Johannes, 93073 Neutraubling (DE); WERNER, Jürgen, 93073 Neutraubling (DE); WIMMER, Thomas, 93073 Neutraubling (DE); WITTMANN, Stephan, 93073 Neutraubling (DE)
(74) Vertreter: Benninger, Johannes

(56) Entgegenhaltungen:
- EP-A2- 0 152 271
- FR-A1- 2 711 977
- US-A- 3 973 672

## Beschreibung

Die vorliegende Erfindung betrifft einen Transportabschnitt zur Zuführung von Artikelzusammenstellungen zu einem Verarbeitungsvorrichtung, wobei die Artikelzusammenstellungen in einer Transportrichtung zu der Verarbeitungsvorrichtung hin bewegt werden, mit den Merkmalen des unabhängigen Anspruchs 1. Weiterhin betrifft die Erfindung ein Verfahren zum Einstellen und/oder Verstellen mindestens einer Transportbahn innerhalb eines Transportabschnitts mit den Merkmalen des unabhängigen Verfahrensanspruchs 13.

Die Erfindung betrifft einen Transportabschnitt zur Zuführung von Artikelzusammenstellungen in einer Transportrichtung zu einem Verpackungsmodul, insbesondere ein Überschubmodul zum Überführen von Artikelzusammenstellungen zu einem Folieneinschlagmodul o.ä. In dem Folieneinschlagmodul werden die vorher gruppierten Zusammenstellungen von Artikeln, beispielsweise zwei Artikel oder Gruppen aus 2×2 Artikeln, 2×3 Artikeln, 2×4 Artikeln, 3×4 Artikeln o.ä. auf eine Schrumpffolie übergeschoben. Diese wird dann um die Artikelzusammenstellung herumgeschlagen und vermittels Wärmezufuhr auf diese und um diese herum aufgeschrumpft. Die Artikelzusammenstellungen werden beispielsweise in einer in Transportrichtung vor dem Transportabschnitt angeordneten Gruppierstation vorbereitet und innerhalb des Transportabschnitts gemäß den Produkt-Anforderungen zusammengestellt. In Abhängigkeit von den jeweiligen Produktspezifikationen erfolgt die Verarbeitung der Artikelzusammenstellungen innerhalb des Transportabschnitts einbahnig oder mehrbahnig. Bei einer mehrbahnigen Verarbeitung kann es notwendig sein, die parallel geführten Artikelzusammenstellungen vor dem Folieneinschlagmodul in dem Transportabschnitt entsprechend einem vorgegebenen Folienüberstand voneinander zu beabstanden.

Hierzu werden beispielsweise Spreizkeile auf den Transportbahnen angeordnet und befestigt, die jeweils speziell an die zu bearbeitenden Artikel oder Artikelzusammenstellungen angepasst sind, beispielsweise in der Breite und/oder Anzahl der Transportbahnen. Bei einem Produktwechsel werden die Spreizkeile ausgetauscht, um den Transportabschnitt produktspezifisch anzupassen. Um eine Überschubplatte von einem einbahnigen Transport auf einen zweibahnigen Transport umzurüsten, wird entweder ein speziell an die Produktanforderungen angepasster Keil auf der Überschubplatte angeordnet. Oder aber es wird ein unspezifischer Spreizkeil verwendet und zusätzlich mindesten ein weiteres Keilelement an diesem befestigt, um die notwendige Speizung herzustellen. Um eine Überschubplatte von einem einbahnigen Transport auf einen dreibahnigen Transport umzurüsten, werden entweder zwei speziell an die Produktanforderungen angepasste Keile auf der Überschubplatte angeordnet. Oder aber es werden zwei unspezifische Spreizkeile verwendet und zusätzlich jeweils mindesten ein weiteres Keilelement an diesen befestigt, um die notwendige Spreizung herzustellen. Dies bedingt bei einem Produktwechsel einen erheblichen Wechselaufwand, zumal in der Regel die Schubstangen ausgebaut werden müssen, um die alten Keilelemente zu entfernen und neue Keilelemente befestigen zu können. Gegebenenfalls müssen jeweils neue, produktspezifisch angepasste Spreizkeile konstruiert werden. Zudem müssen entsprechende Formatteile vorgehalten werden.

Die Offenlegungsschrift WO 2014/18753 A1 beschreibt eine Vorrichtung zur Herstellung von Gebinden, wobei aus einem breiten Behälterstrom mittels Gasseneinteilung Behälter in mehrere einspurige Behälterströme umgewandelt werden und Behältergruppen gebildet werden, die nachfolgend zu einem Gebinde zusammengefasst werden.

Die Patentschrift US 5 765 336 beschreibt eine Vorrichtung zum Herstellen von Schrumpfverpackungen, die einbahnig und zweibahnig betrieben werden kann. Zum Auftrennen des ankommenden Artikelstroms in zwei Bahnen wird von oben her ein Einteilerelement auf der Überschubplatte eingesetzt, über die die in zwei Bahnen unterteilten Artikel vermittels einer Schubstange transportiert werden.

Die FR 2 711 977 A1 beschreibt eine Vorrichtung zum Verteilen bzw. Trennen von Artikeln, d.h. einen Transportabschnitt nach dem Oberbegriff des Anspruchs 1.

Die Artikel werden von einem Zuförderer an einen Schubförderer in Form von einer Stange übergeben, welcher die Artikel entlang einer Lagerfläche bewegt. Die Lagerfläche umfasst seitliche Begrenzungen, so dass die Artikel hintereinander angeordnet werden. In Förderrichtung nach den seitlichen Begrenzungen sind in der Lagefläche Schlitze vorgesehen, unterhalb welchen jeweils Förderer vorgesehen sind. Die Förderer umfassen Bänder, die mit ihrem Obertrum unterhalb der Lagerfläche bewegt werden. Der Lagerfläche ist ein Detektor zugeordnet, welcher die ankommenden Artikel erfassen und entsprechend auswerten kann, zu welchem Abförderer die jeweiligen Artikel geleitet werden müssen. In Abhängigkeit davon werden die Förderer mittels Zylinder derart angehoben, so dass deren Bänder über die Schlitze ragen, wodurch die Artikel entsprechend zu den Abförderer geleitet werden.

Eine Aufgabe der Erfindung ist es, einen Transportabschnitt für Artikel oder Artikelzusammenstellungen im Zuführbereich zu einer Verarbeitungsvorrichtung, beispielsweise einem Verpackungsmodul, derart auszustatten, dass dieser Transportabschnitt schnell und einfach an die jeweiligen Produktanforderungen angepasst werden kann, wobei insbesondere kein arbeitsaufwändiger Austausch von Formatteilen notwendig ist.

Die obige Aufgabe wird durch einen Transportabschnitt und ein Verfahren zum Einstellen und/oder Verstellen mindestens einer Transportbahn innerhalb eines Transportabschnitts gelöst, die die Merkmale in den Patentansprüchen 1 und 12 umfassen. Weitere vorteilhafte Ausgestaltungen werden durch die Unteransprüche beschrieben.

Die Erfindung bezieht sich auf einen Transportabschnitt zur Zuführung von Artikeln oder Artikelzusammenstellungen in einer Transportrichtung zu einer Verarbeitungsvorrichtung. Die Erfindung bezieht sich weiterhin auf ein Verfahren zum Einstellen und/oder Verstellen mindestens einer Transportbahn innerhalb eines Transportabschnitts und eine Verpackungsanlage für Artikel oder Artikelzusammenstellungen.

Eine solche Verpackungsanlage kann gemäß einer Ausführungsform wenigstens eine Gruppiereinheit zum Zusammenstellen der Artikel und eine Verarbeitungsvorrichtung, insbesondere ein Verpackungsmodul, umfassen, wobei die Gruppiereinheit einen Transportabschnitt zur Zuführung von Artikelzusammenstellungen in einer Transportrichtung zu dem Verpackungsmodul umfasst. Ein solcher Transportabschnitt kann aber auch einer Gruppiereinheit und einer Verarbeitungsvorrichtung, insbesondere einem Verpackungsmodul, nachgeordnet angeordnet sein und der Verteilung von durch die Gruppiereinheit zusammengestellten und in dem Verpackungsmodul vermittels einer Umverpackung zu Gebinde zusammengefassten Artikelzusammenstellungen dienen.

Bei den Artikeln kann es sich beispielsweise um Getränkebehälter wie Flaschen oder Dosen o.ä. handeln. Es kann vorgesehen sein, dass eine Mehrzahl von gleichen oder unterschiedlichen Artikeln entsprechend gruppiert und durch eine Kartonumverpackung, durch eine Umreifung oder mehrere Umreifungen, durch eine Folienverpackung o. dgl. zu einem Gebinde bzw. Mischgebinde zusammengefasst werden soll. Beispielsweise kann eine Mehrzahl von Getränkebehältern durch eine Schrumpfverpackung, durch ein Umreifungsband oder mehrere Umreifungsbänder, eine Kartonumverpackung o.ä. zusammengehalten werden.

Der Transportabschnitt umfasst eine Überschubplatte mit einer Transportfläche, auf der die Artikel oder Artikelzusammenstellungen gleitend bewegt werden. Dafür ist dem Transportabschnitt mindestens ein geeignetes Antriebsmittel für die Artikel oder Artikelzusammenstellungen zugeordnet. Insbesondere sind oberhalb der Überschubplatte angeordnete Schubmittel zum Bewegen der Artikel oder Artikelzusammenstellungen auf der Überschubplatte vorgesehen. Die Schubmittel sind zumindest bereichsweise in Transportrichtung beweglich und nehmen die Artikel oder Artikelzusammenstellungen bei dieser Bewegung in Transportrichtung mit. Beispielsweise sind an Schubketten angeordnete Schubbalken vorgesehen, die jeweils von oben her hinter den Artikeln oder Artikelzusammenstellungen angeordnet werden. Die Schubbalken werden zumindest bereichsweise in Transportrichtung oberhalb der mit einer reibungsarmen Oberfläche ausgestatteten Überschubplatte geführt. Die Schubbalken werden jeweils hinter aus einem Förderabschnitt einlaufenden vorgruppierten Artikeln oder Artikelzusammenstellungen angeordnet und nehmen diese bei der Bewegung in Transportrichtung mit, wobei die Artikel oder Artikelzusammenstellungen insbesondere über die Überschubplatte gleiten.

Der Transportabschnitt wird seitlich durch äußere Führungselemente begrenzt. Diese sind vorzugsweise relativ zueinander einstellbar, wodurch die Transportbreite auf der Überschubplatte begrenzt werden kann. Beispielsweise können die äußeren Führungselemente durch seitlich von außen angreifende Schubstangen, Stangengetriebe o.ä. parallel zur Transportrichtung verschoben werden, so dass bei einer Bewegung der äußeren Führungselemente zur Mitte der Überschubplatte hin die Transportbreite verringert wird und bei einer Bewegung der äußeren Führungselemente jeweils zum Rand der Überschubplatte hin die Transportbreite verbreitert wird.

Erfindungsgemäß umfasst der Transportabschnitt mindestens ein die Uberschubplatte zumindest teilweise durchgreifendes inneres Führungselement mit einer planen Oberseite, das vertikalbeweglich ausgebildet ist. Dadurch kann das mindestens eine innere Führungselement in einer ersten Arbeitsposition innerhalb der Überschubplatte versenkt und insbesondere derart angeordnet werden, dass die plane Oberseite des Führungselementes und die Transportfläche der Überschubplatte eine gemeinsame Transportebene bilden. In diesem Fall können die Artikel oder Artikelzusammenstellungen über das innere Führungselement geführt werden. Weiterhin kann das mindestens eine innere Führungselement in einer zweiten Arbeitsposition angehoben und zumindest teilweise oberhalb der Transportfläche der Überschubplatte angeordnet werden. In diesem Fall übernimmt das mindestens eine Führungselement eine Teilungs- und/oder Führungsfunktion für die durch den Transportabschnitt transportierten Artikel oder Artikelzusammenstellungen. Durch das mindestens eine angehobene Führungselement wird die Transportfläche der Überschubplatte in zwei Transportbahnen für die Artikel oder Artikelzusammenstellungen unterteilt. Das angehobene innere Führungselement stellt eine seitliche Führung einer Transportbahn dar, insbesondere eine innere Führung, während die äußeren Führungselemente die äußere Führung der jeweilig gebildeten Transportbahn bilden.

Gemäß einer bevorzugten Ausführungsform weist das mindestens eine innere Führungselement eine sich in Transportrichtung verbreiternde Keilform auf. Dadurch werden die am angehobenen Führungselement aufgeteilten Artikel oder Artikelzusammenstellungen zumindest bereichsweise auseinander geführt.

Gemäß einer bevorzugten Ausführungsform weist die Überschubplatte mindestens eine Ausnehmung auf, die die Form der Oberseite des mindestens einen Führungselementes aufweist. Das mindestens eine Führungselement ist der Ausnehmung zugeordnet und kann vertikal durch diese Ausnehmung geführt werden, insbesondere zwischen der oben beschriebenen ersten, versenkten Arbeitsposition und der zweiten, angehobenen Arbeitsposition.

Vorzugsweise weist ein Transportabschnitt eine Mehrzahl von inneren Führungselementen und eine Überschubplatte mit einer korrespondierenden Anzahl von Ausnehmungen auf. Gemäß einer Ausführungsform weist der Transportabschnitt eine ungerade Anzahl von inneren Führungselementen. Hierbei können beispielsweise ein zweites und drittes Führungselement direkt beidseitig benachbart zu einem mittigen inneren Führungselement und dieses kontaktierend angeordnet sein. Diese zusätzlichen inneren Führungselemente sind vorzugsweise ebenfalls keilförmig, insbesondere sich in Transportrichtung verbreiternd ausgebildet. Die Überschubplatte weist eine Ausnehmung auf, die korrespondierend zu den Oberseiten der drei inneren Führungselemente ausgebildet ist. Dadurch lassen sich unterschiedliche Spreizmaße zwischen den innerhalb des Transportabschnitts aufgeteilten Artikel oder Artikelzusammenstellungen einstellen. Befindet sich nur das mittige innere Führungselement in der angehobenen Position und die beidseitig angeordneten zweiten und dritten dagegen in der versenkten Position, dann wird durch das mittige innere Führungselement ein erster Abstand zwischen den aufgeteilten Artikeln bzw. Artikelzusammenstellungen eingestellt. Befinden sich dagegen alle drei inneren Führungselemente in der angehobenen Position, dann wird zwischen den aufgetrennten Artikeln oder Artikelzusammenstellungen ein zweiter, größerer Abstand erzeugt.

Alternativ oder zusätzlich können weitere beabstandete innere Führungselemente vorgesehen sein, die insbesondere das mittige innere Führungselement und/oder ggfl. beidseitig an diesem angeordnete weitere innere Führungselemente nicht berühren. Diese sind ebenfalls in Transportrichtung ausgerichtet und können sich ebenfalls in Transportrichtung verbreitern. Befinden sich in einer ersten Arbeitsposition alle inneren Führungselemente in der versenkten Anordnung, so dass die Oberseite der Führungselemente und die Transportfläche der Überschubplatte in einer Ebene angeordnet sind, dann ist zwischen den äußeren Führungselementen eine einzige Transportbahn ausgebildet, deren Breite durch den Abstand der äußeren, parallel zur Transportrichtung verstellbaren Führungselemente definiert wird. Gemäß einer weiteren Ausführungsform ist/sind in einer zweiten Arbeitsposition des Transportabschnitts das mindestens eine mittig angeordnete Führungselement und ggfl. weitere direkt zu diesem benachbarte innere Führungselemente in angehobener Position zumindest teilweise oberhalb der Transportfläche der Überschubplatte angeordnet, während die beabstandet angeordneten inneren Führungselemente versenkt angeordnet sind, so dass deren Oberseiten und die Transportfläche in einer Ebene angeordnet sind. In diesem Fall wird die Transportfläche der Überschubplatte in zwei Transportbahnen für die Artikel oder Artikelzusammenstellungen unterteilt.

Befindet sich in einer dritten Arbeitsposition das mittige innere Führungselement und ggfl. weitere, direkt beidseitig angrenzende innere Führungselemente und die beabstandeten inneren Führungselemente in der angehobenen Position, dann wird die Transportfläche der Überschubplatte in vier Transportbahnen unterteilt, in die die Artikel oder Artikelzusammenstellungen durch die inneren Führungselemente aufgeteilt und weitergeführt werden.

Diese Ausführungsform mit mindestens einem weitgehend parallel zur Transportrichtung ausgerichteten inneren Führungselement ist besonders zur Verwendung innerhalb einer Gruppiereinheit geeignet, um in einem Massenstrom oder in Parallelreihen einlaufende Artikel in mindestens zwei weiterführende Artikelströme aufzuteilen.

Gemäß einer weiteren Ausführungsform eines Transportabschnitts umfasst dieser zwei winklig zueinander und winklig zur Transportrichtung angeordnete innere Führungselemente. Insbesondere kann vorgesehen sein, dass ein erstes inneres Führungselement in einem ersten Winkel zwischen 5° und 75° zur Transportrichtung der einlaufenden Artikel oder Artikelzusammenstellungen angeordnet ist und dass ein zweites inneres Führungselement in einem ersten Winkel zwischen -5° und -75° zur Transportrichtung der einlaufenden Artikel oder Artikelzusammenstellungen angeordnet ist. Vorzugsweise ist der Betrag des ersten und des zweiten Winkels gleich.

Die winklig angeordneten inneren Führungselemente können ebenfalls in Transportrichtung verbreiternd ausgebildet sein. Weiterhin kann vorgesehen sein, dass mindesten eines der beiden inneren Führungselemente geteilt ausgeführt ist. Insbesondere können bei dem geteilten bzw. segmentierten inneren Führungselement einzelne Segment hochgefahren oder abgesenkt werden. Diese Ausführungsform ist insbesondere geeignet, um einreihig zugeführte Artikelzusammenstellungen, beispielsweise Gebinde, auf zwei oder drei weiterführende Transportbahnen aufzuteilen. Bei einer solchen Ausführungsform sind drei Arbeitspositionen des Transportabschnitts denkbar. Insbesondere eine erste Ausführungsform, bei der beide inneren Führungselemente abgesenkt sind, so dass beispielsweise einreihig zugeführte Gebinde in einer Flucht zur Transportrichtung der einlaufenden Gebinde durch den Transportabschnitt und dabei über die Oberseiten der inneren Führungselemente geführt werden. Insbesondere werden die Gebinde dabei von einem zuführenden Förderband durch den Transportabschnitt zu einem in einer Flucht zum zuführenden Förderband angeordneten abführenden Förderband transportiert. In einer zweiten Arbeitsposition ist beispielsweise das segmentierte innere Führungselement angehoben und das andere innere Führungselement befindet sich in der abgesenkten Position. Das einlaufende Gebinde wird durch das angehobene segmentierte innere Führungselement in eine erste Richtung zu einem ersten seitlich angeordneten abführenden Förderband abgelenkt. Befindet sich dagegen in einer dritten Arbeitsposition das segmentierte innere Führungselement in der abgesenkten Position und das andere innere Führungselement befindet sich in der angehobenen Position, dann wird das einlaufende Gebinde in eine zweite Richtung zu einem zweiten seitlich angeordneten abführenden Förderband abgelenkt.

Ein solcher Transportabschnitt kann auch verwendet werden, um beispielsweise fehlerhafte Gebinde auszuschleusen. Hierfür ist vor dem Transportabschnitt mindestens ein Sensor angeordnet, beispielsweise ein Bilderkennungssensor, mit dem fehlerhafte Gebinde, beispielsweise mit defekter Umverpackung, erkannt werden können. Die Gebinde werden in der Regel durch den Transportabschnitt in der ersten Arbeitposition, d.h., mit versenkten inneren Führungselementen, von einem zuführenden Förderband zu einem fluchtendangeordneten abführenden Förderband weitergeführt. Wird ein defektes Gebinde erkannt, dann wird eines der Führungselemente angehoben, das Gebinde durch das angehobene innere Führungselement von der Transportrichtung abgelenkt, einem seitlich versetzt angeordneten Förderband zugeführt und somit aus dem Gebindestrom ausgeschleust.

Die vertikale Verstellung des mindestens einen inneren Führungselementes kann beispielsweise vermittels mindestens eines Hubzylinders, mittels einer Spindelverstellung o.ä. erfolgen. Die Oberfläche der Oberseite des mindestens einen inneren Führungselementes besteht vorzugsweise aus demselben Material wie die Überschubplatte oder weist einen Beschichtung mit einem Reibwert auf, die in etwa dem Reibwert der Überschubplatte entspricht, so dass die Bewegung der Artikel bei versenkten inneren Führungselementen ohne Störung über deren Oberseite erfolgen kann.

Ein erfindungsgemäßer Transportabschnitt, insbesondere in einer der vorbeschriebenen Ausführungsformen, ermöglicht eine automatische Umstellung zwischen einen einbahnigen und einem mehrbahnigen Transport von Artikeln oder Artikelzusammenstellungen, beispielsweise Gebinden o.ä. Die notwendigen Umstellzeiten sind dabei gegenüber einem herkömmlichen Austausch von Spreizkeilen oder anderen Formatteilen deutlich reduziert, insbesondere da hierbei kein Ausbau von Schubstangen und/oder weiteren Bauteilen des Transportabschnitts notwendig ist.

Die Erfindung bezieht sich weiterhin auf ein Verfahren zum Einstellen und/oder Verstellen mindestens einer Transportbahn innerhalb eines Transportabschnitts zur Zuführung von Artikeln oder Artikelzusammenstellungen in einer Transportrichtung zu einer Verarbeitungsvorrichtung für die Artikel oder Artikelzusammenstellungen, wobei die Artikel oder Artikelzusammenstellungen innerhalb des Transportabschnitts in Transportrichtung auf einer Überschubplatte gleitend bewegt werden, wobei zur Einstellung der mindestens einen Transportbahn mindestens ein der Überschubplatte zugeordnetes inneres Führungselement durch eine vertikale Bewegung in der Überschubplatte versenkt oder zumindest bereichsweise oberhalb der Überschubplatte angeordnet wird.

Das Verfahren kann alternativ oder zusätzlich zu den beschriebenen Merkmalen ein oder mehrere Merkmale und/oder Eigenschaften der zuvor beschriebenen Vorrichtung umfassen. Ebenfalls kann die Vorrichtung alternativ oder zusätzlich einzelne oder mehrere Merkmale und/oder Eigenschaften des beschriebenen Verfahrens aufweisen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Seitenansicht einer ersten Ausführungsform einer Verpackungsanlage zum Zusammenstellen von Artikeln als Gebinde.
Fig. 2 zeigt eine perspektivische Darstellung von oben einer innerhalb eines Überschubmoduls verwendete Überschubanordnung einer Verpackungsanlage gemäß Fig. 1.
Fig. 3 zeigt eine perspektivische Darstellung der Überschubanordnung gemäß Fig. 2 von unten.
Fig. 4 zeigt eine Überschubplatte der Überschubanordnung gemäß Figuren 2 und 3.
Fig. 5 zeigt eine perspektivische Darstellung einer Überschubanordnung in einer ersten Arbeitsposition von oben.
Fig. 6 zeigt eine perspektivische Darstellung einer Überschubanordnung in einer ersten Arbeitsposition von unten.
Fig. 7 zeigt eine Darstellung einer Überschubanordnung in einer ersten Arbeitsposition von oben.
Fig. 8 zeigt eine weitere perspektivische Darstellung einer Überschubanordnung in einer ersten Arbeitsposition von unten.
Fig. 9 zeigt eine Darstellung einer Überschubanordnung in einer ersten Arbeitsposition in Transportrichtung gesehen.
Fig. 10 zeigt eine Darstellung einer Überschubanordnung in einer zweiten Arbeitsposition von oben.
Fig. 11 zeigt eine perspektivische Darstellung einer Überschubanordnung in einer zweiten Arbeitsposition von oben.
Fig. 12 zeigt eine Darstellung einer Überschubanordnung in einer zweiten Arbeitsposition in Transportrichtung gesehen.
Fig. 13 zeigt eine weitere perspektivische Darstellung einer Überschubanordnung in einer zweiten Arbeitsposition von unten.
Fig. 14 zeigt eine Darstellung einer Überschubanordnung in einer dritten Arbeitsposition von oben.
Fig. 15 zeigt eine perspektivische Darstellung einer Überschubanordnung in einer dritten Arbeitsposition von oben.
Fig. 16 zeigt eine Darstellung einer Überschubanordnung in einer dritten Arbeitsposition in Transportrichtung gesehen.
Fig. 17 zeigt eine weitere perspektivische Darstellung einer Überschubanordnung in einer dritten Arbeitsposition von unten.
Figuren 18 bis 31 zeigen schematisch einen Ablauf beim Aufteilen von Gebinden vermittels eines erfindungsgemäßen Transportabschnitts.
Fig. 32 zeigt die Verwendung eines Transportabschnitts gemäß Figuren 18 bis 31 zum Aufteilen von Gebinden in drei abgehende Transportbahnen.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

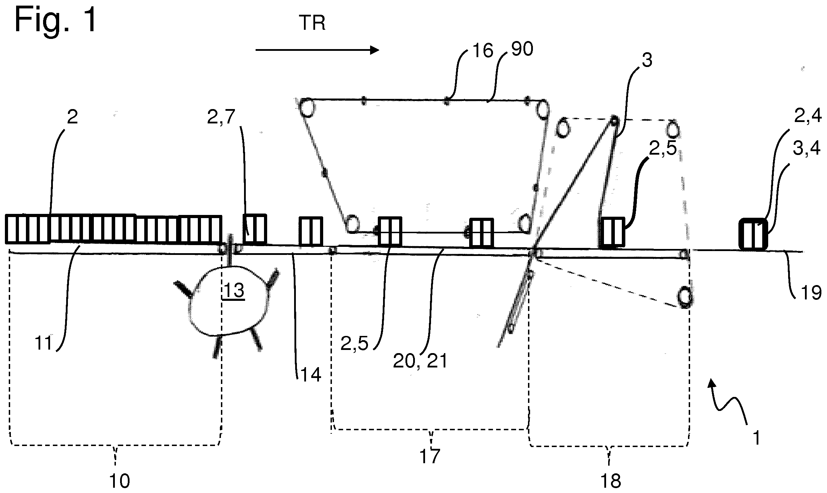

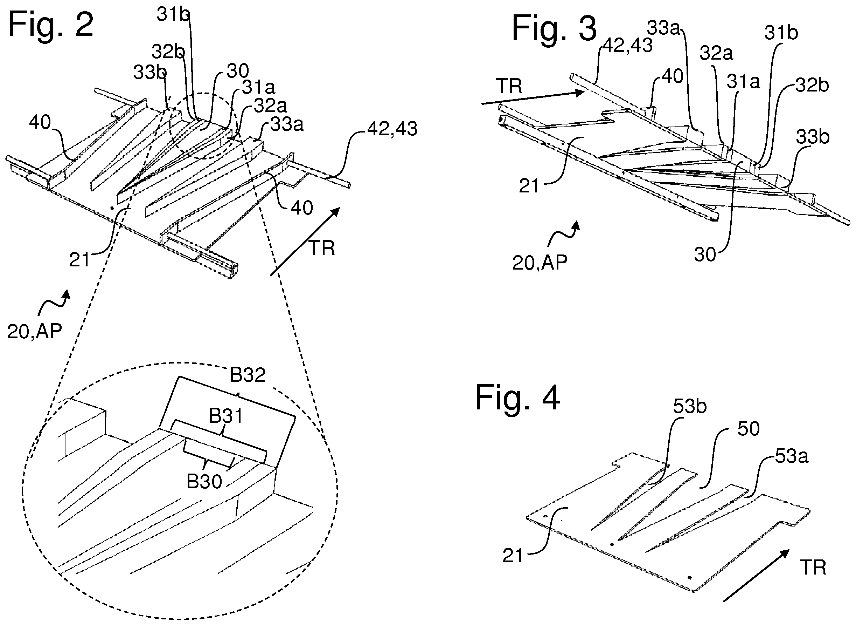

Die schematische Ansicht der Fig. 1 zeigt eine erste Ausführungsform einer Verpackungsanlage 1 zum Zusammenstellen von Artikeln 2 als Gebinde 4 in seitlicher Darstellung, und die Fig. 2 zeigt eine innerhalb eines Überschubmoduls 17 verwendete Überschubanordnung 20 einer Verpackungsanlage 1 gemäß Fig. 1. Die dargestellte Verpackungsanlage 1 dient dazu, eine Zusammenstellung 5 von Artikeln 2 durch eine Schrumpffolie 3 oder eine andere geeignete Umverpackung zu einem Gebinde 4 zusammenzufassen.

Die Verpackungsanlage 1 umfasst eine Artikelzuführung 10. Hierbei werden die Artikel 2 vorzugsweise in mehreren parallelen Reihen 6 über Fördermittel, beispielsweise über ein Förderband 11 oder mehrere parallele Förderbänder, in Transportrichtung TR bewegt. Die Reihen 6 können beispielsweise durch Gassenbleche (nicht dargestellt) räumlich getrennt voneinander auf dem Förderband 11 bewegt werden. Alternativ erfolgt die Einteilung der Artikel 2 in Parallelreihen in einem davor angeordneten Modul.

Die in Reihen 6 zugeführten Artikel 2 werden in einem nachfolgenden Transportabschnitt vorgruppiert. Beispielsweise werden durch einen Einteiler 13 aus den Reihen 6 jeweils Artikelgruppen 7 abgetrennt, bei denen die gemeinsam gruppierten Artikel 2 jeweils hintereinander angeordnet sind. Die Artikelgruppen 7 werden auf einem weiteren Förderband 14 in Transportrichtung TR zu einem weiteren Transportabschnitt befördert. Bei diesem weiteren Transportabschnitt handelt es sich insbesondere um ein Überschubmodul 17 mit einer Überschubanordnung 20, die mindestens ein inneres Führungselement 30 und äußere Führungselemente 40 umfasst (vgl. Fig. 2).

Innerhalb der Überschubanordnung 20 werden die Artikelgruppen 7 passiv bewegt, beispielsweise indem sie vermittels Schubstangen 16 angeschoben werden. Die Schubstangen 16 werden beispielsweise durch beidseitig oberhalb der Überschubanordnung 20 angeordnete Förderriemen bzw. Schubketten 90 angetrieben, die die Schubstangen 16 zumindest bereichsweise in Transportrichtung TR bewegen. Die an den Schubketten 90 angeordnete Schubbalken 16 werden von oben her hinter den vorgruppierten Artikelgruppen 7 angeordnet. Durch die Bewegung der Schubbalken 16 in Transportrichtung TR werden die Artikelgruppen 7 auf der mit einer reibungsarmen Oberfläche ausgestatteten Überschubplatte 21 der Überschubanordnung 20 mitgeführt. Anschließend werden die Schubbalken 16 nach oben von den Artikelgruppen 7 wegbewegt und entgegen der Transportrichtung TR oberhalb der nunmehr gebildeten und auf dem Überschubblech 15 geführten Zusammenstellungen 5 zurückgeführt. Das Bewegungsprofil der Schubbalken 16 ergibt sich dabei insbesondere durch die Ausbildung und/oder Anordnung der Schubketten 90.

In der Regel werden die Schubbalken 16 mit einer Geschwindigkeit in Transportrichtung TR über das Überschubblech 21 bewegt, die gegenüber der Bewegungsgeschwindigkeit der Artikel 2 auf dem Förderband 14 zumindest geringfügig erhöht ist. Der Abstand der Schubbalken 16 an den Schubketten 90 und/oder die Geschwindigkeit der Schubbalken 16 bewirken eine gewünschte Beabstandung zwischen aufeinanderfolgenden Artikelgruppen 7. In dieser Weise werden mehrere Artikelgruppen 7 in dem Überschubbereich 17 zu Zusammenstellungen 5 zusammengestellt. Eine solche Zusammenstellung 5 enthält die Anzahl und Anordnung an Artikeln 2, wie sie im fertigen Gebinde 4 zu finden sind. Parallel geführte Zusammenstellungen 5 von Artikeln 2 werden zudem im Überschubbereich 17 entsprechend dem Spreizmaß im Folieneinschlagmodul 18 voneinander beabstandet.

Hierzu sind im Überschubbmodul 17 - wie in Fig. 2 dargestellt - äußere Führungselemente 40 und mindestens ein inneres Führungselement 30 vorgesehen. Die äußeren Führungselemente 40 sind im Wesentlichen parallel zur Transportrichtung TR angeordnet und orthogonal zur Transportrichtung TR verstellbar. Beispielsweise können die äußeren Führungselemente über geeignete Verstellmittel 42, beispielsweise Verstellspindeln 43 o.ä. vorzugsweise parallelverschieblich zur Transportrichtung TR verstellt werden. Somit kann durch die äußeren Führungselemente 40 die zum Artikeltransport zur Verfügung stehende Breite im Überschubmodul 17 angepasst und begrenzt werden. Das mindestens eine innere Führungselement 30 dient der entsprechenden Beabstandung der Zusammenstellungen 5 von Artikeln 2 gemäß dem notwendigen Spreizmaß.

Das erforderliche Spreizmaß bzw. der notwendige Abstand der Zusammenstellungen 5 von Artikeln 2 bzw. Artikelgruppen 7 voneinander wird durch den vorgegebenen Folienüberstand im Folieneinschlagmodul 18 definiert und ist produktabhängig. Herkömmlicherweise wird die erforderliche Spreizung zwischen den durch Vorgruppierung gebildeten parallelen Artikelgruppen 7 beispielsweise im Überschubmodul 17 über einen fest montierten Spreizkeil eingestellt. Die dermaßen beabstandeten Zusammenstellungen 5 von Artikeln 2 werden anschließend bis zum Folieneinschlagmodul 18 parallel weitergeführt. Aktuell werden die benötigten Spreizkeile und die inneren Führungen in dem Überschubmodul 17 einer sogenannten Gebindeformeinheit von der Auftragsabwicklung produktspezifisch erstellt. Bei Nachrüstungen müssen u.U. produktspezifisch neue Spreizkeile und Führungen erstellt werden. Diese müssen bei einer Sortenumstellung vom Bediener gewechselt werden, was aufgrund hoher Umstellzeiten zu entsprechenden Produktionsausfallzeiten führt. Auch eine Umstellung beispielsweise von einem zweibahnigen auf einen vierbahnigen Transport ist nur vermittels zeitaufwändiger Umbauarbeiten möglich. Aufgrund eines ständig wachsenden Sortiments neuer Produkte ist eine Automatisierung von Formatteilwechseln schwierig und aufwändig, da insbesondere bei neuen Produkten gegebenenfalls erst neue Formatteile entworfen und hergestellt werden müssen.

Vermittels des mindestens einen versenkbaren inneren Führungselements 30, insbesondere vermittels einer Mehrzahl von versenkbaren Führungselementen 30, 31a, 31b, 32a, 32b und 33a, 33b ist eine Anpassung der Verpackungsanlage 1, insbesondere des Transportabschnitts innerhalb des Überschubmoduls 17 der Verpackungsanlage 1, bei einem Produktwechsel besonders schnell und einfach realisierbar. Insbesondere müssen keine Formatteile ausgetauscht und zwischenzeitlich gelagert werden. Die Einstellung der inneren Führungselemente 30, 31a, 31b, 32a, 32b und 33a, 33b erfolgt - wie nachfolgend detailliert ausgeführt - über eine vertikale Verstellung der inneren Führungselemente 30, 31a, 31b, 32a, 32b und 33a, 33b.

Die im Überschubmodul 17 abgetrennten Zusammenstellungen 5 von Artikeln 2 werden im nachfolgend angeordneten Folieneinschlagmodul 18 mit Schrumpffolie 3 umhüllt und über ein weiteres Förderband 19 einer Schrumpfvorrichtung (nicht dargestellt) zugeführt. In der Schrumpfvorrichtung wird die Schrumpffolie 3 auf die Artikel 2 der Zusammenstellung 5 aufgeschrumpft, wodurch ein fertiges Gebinde 4 gebildet wird.

Die Fig. 3 zeigt eine perspektivische Darstellung einer Überschubanordnung 20 gemäß Fig. 2 von unten gesehen, und Fig. 4 zeigt eine Überschubplatte 21 einer Überschubanordnung 20 gemäß Figuren 2 und 3. Bei der in Fig. 3 gezeigten Überschubanordnung 20 befinden sich die inneren Führungselemente 30, 31a, 31b, 32a, 32b und 33a, 33b in einer Arbeitsposition AP, bei der alle inneren Führungselemente 30, 31a, 31b, 32a, 32b und 33a, 33b zumindest bereichsweise oberhalb der Überschubplatte 21 angeordnet sind. Die Überschubplatte 21 weist Ausnehmungen 50, 53a, 53b auf, die korrespondierend zu der Form der inneren Führungselemente 30, 31a, 31b, 32a, 32b und 33a, 33b ausgebildet sind. Insbesondere ist eine erste Ausnehmung 50 dergestalt ausgebildet, dass das mittlere innere Führungselement 30 und die seitlich daran angrenzenden Führungselemente 31a, 31b, 32a, 32b vertikal durch die erste Ausnehmung 50 geführt werden können. Dagegen sind die seitlich zur ersten Ausnehmung 50 angeordneten zweiten Ausnehmungen 53a, 53b korrespondierend zu den beabstandet angeordneten, jeweils zwischen dem mittigen inneren Führungselement 30 und einem äußeren Führungselement 40 angeordneten inneren Führungselementen 33a, 33b ausgebildet, so dass diese jeweils vertikal durch die jeweils zugeordnete zweite Ausnehmung 53a, 53b der Überschubplatte 21 geführt werden können.

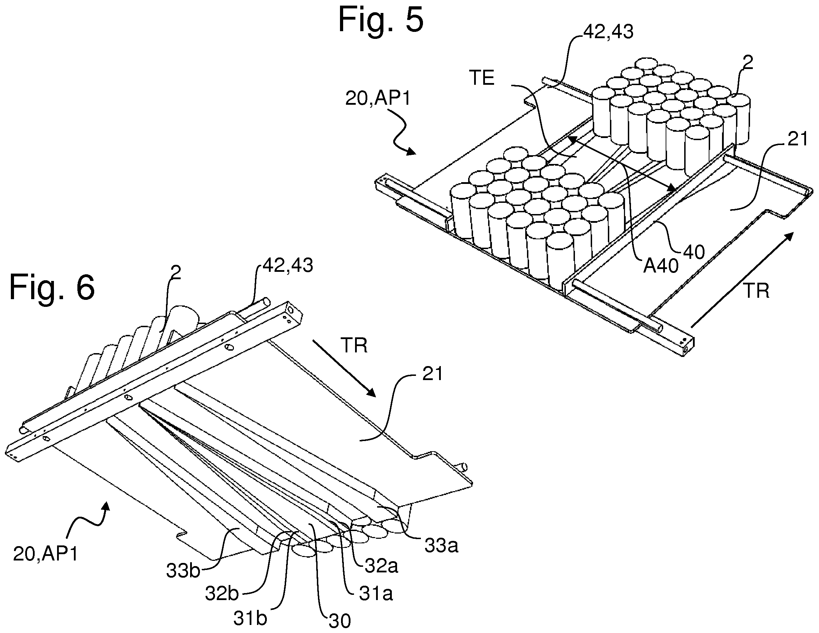

Die inneren Führungselemente 30, 31a, 31b, 32a, 32b und 33a, 33b können in einer ersten Arbeitsposition AP1 - wie sie nachfolgend näher im Zusammenhang mit den und unter Bezugnahme auf die Figuren 5 bis 9 beschrieben wird - durch die Ausnehmungen 50, 53a, 53b abgesenkt werden, so dass die Oberseiten der inneren Führungselemente 30, 31a, 31b, 32a, 32b und 33a, 33b zusammen mit der Oberseite der Überschubplatte 21 eine gemeinsame Transportebene TE für die Artikel 2 ausbilden.

Das mittige innere Führungselement 30 weist insbesondere eine sich in Transportrichtung TR verbreiternde Keilform auf. Die seitlich direkt an das mittige innere Führungselemente 30 angrenzenden inneren Führungselemente 31a, 31b und die wiederum an diese angrenzenden inneren Führungselemente 32a, 32b weisen ebenfalls eine sich in Transportrichtung TR verbreiternde Keilform auf. Befindet sich nur das mittige innere Führungselement 30 zumindest bereichsweise oberhalb der Überschubplatte 30, dann kann - wie insbesondere in der Detailvergrößerung zu Fig. 2 dargestellt - damit eine Zwischenspurbreite B30 zwischen den im Überschubmodul 17 geförderten Artikelgruppen 7 eingestellt werden. Befinden sich dagegen das mittige innere Führungselement 30 und die beidseitig direkt angrenzenden inneren Führungselemente 31a, 31b oberhalb der Überschubplatte 30, dann kann damit eine Zwischenspurbreite B31 zwischen den im Überschubmodul 17 geförderten Artikelgruppen 7 eingestellt werden. Befinden sich dagegen das mittige innere Führungselement 30, die beidseitig direkt angrenzenden inneren Führungselemente 31a, 31b sowie die daran direkt angrenzenden inneren Führungselemente 32a, 32b oberhalb der Überschubplatte 30, dann kann damit eine Zwischenspurbreite B32 zwischen den im Überschubmodul 17 geförderten Artikelgruppen 7 eingestellt werden.

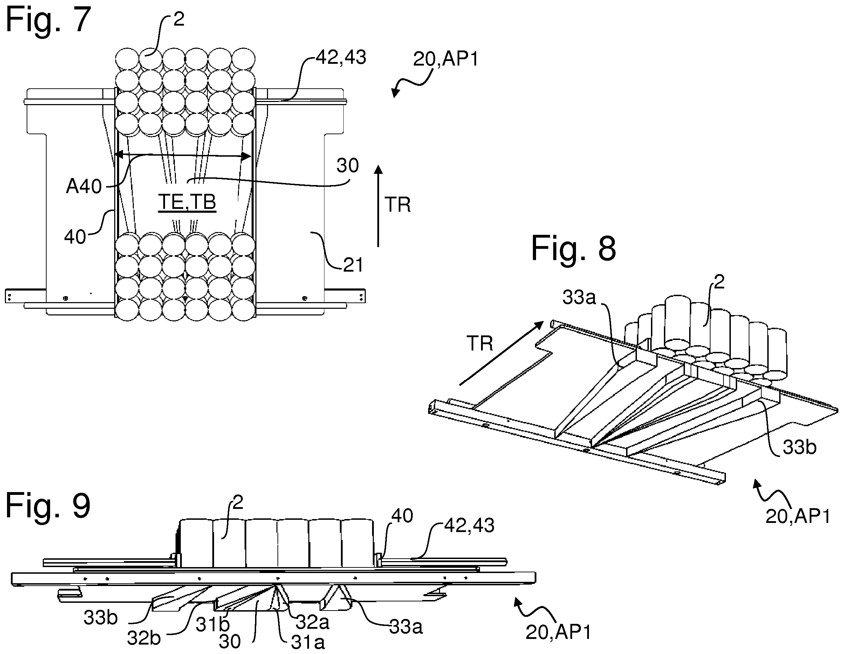

Die Figuren 5 bis 9 zeigen verschiedene perspektivische Darstellungen einer Überschubanordnung 20 in einer ersten Arbeitsposition AP1. Hierbei sind alle inneren Führungselemente 30, 31a, 31b, 32a, 32b und 33a, 33b zumindest bereichsweise unterhalb der Überschubplatte 21 versenkt angeordnet. Insbesondere bilden die Oberseiten der inneren Führungselemente 30, 31a, 31b, 32a, 32b und 33a, 33b zusammen mit der Oberseite der Überschubplatte 21 eine gemeinsame Transportebene bzw. eine einzige Transportbahn TB für die Artikel 2. D.h. hierbei fluchten die Oberseiten der inneren Führungselemente 30, 31a, 31b, 32a, 32b und 33a, 33b mit der Oberseite der Überschubplatte 21 annähernd und ohne Ausbildung einer Stufe oder Kante, so dass dadurch die gemeinsame Transportebene bzw. die einzige Transportbahn TB für die Artikel 2 gebildet ist. Die Breite der Transportbahn TB wird durch den Abstand A40 zwischen den beiden einstellbaren äußeren Führungselementen 40 begrenzt (vgl. Figuren 5 und 7). Bei dieser Einstellung der Überschubanordnung 20 werden die einlaufenden Artikel 2 ohne Aufteilung in Gruppen durch das Überschubmodul 17 (vgl. Fig. 1) transportiert.

Der Mechanismus, mit dem die inneren Führungselemente 30, 31a, 31b, 32a, 32b und 33a, 33b zumindest bereichsweise unterhalb des Niveaus der Überschubplatte 21 versenkt bzw. angehoben werden, kann beispielsweise mittels Hubzylindern, einer Spindelverstellung oder ähnlichen, dem Fachmann bekannten Verstellmechanismen arbeiten. Die Oberseite der inneren Führungselemente 30, 31a, 31b, 32a, 32b und 33a, 33b besteht vorzugsweise jeweils aus demselben Material wie die Überschubplatte 21 bzw. weist zumindest eine Beschichtung mit einem Reibwert auf, der in etwa dem Reibwert der Überschubplatte 21 entspricht, so dass die Artikel bei der gleitenden Bewegung über die Überschubplatte 21 nicht durch die versenkten Führungselemente 30, 31a, 31b, 32a, 32b oder 33a, 33b in ihrer Bewegung gehindert werden.

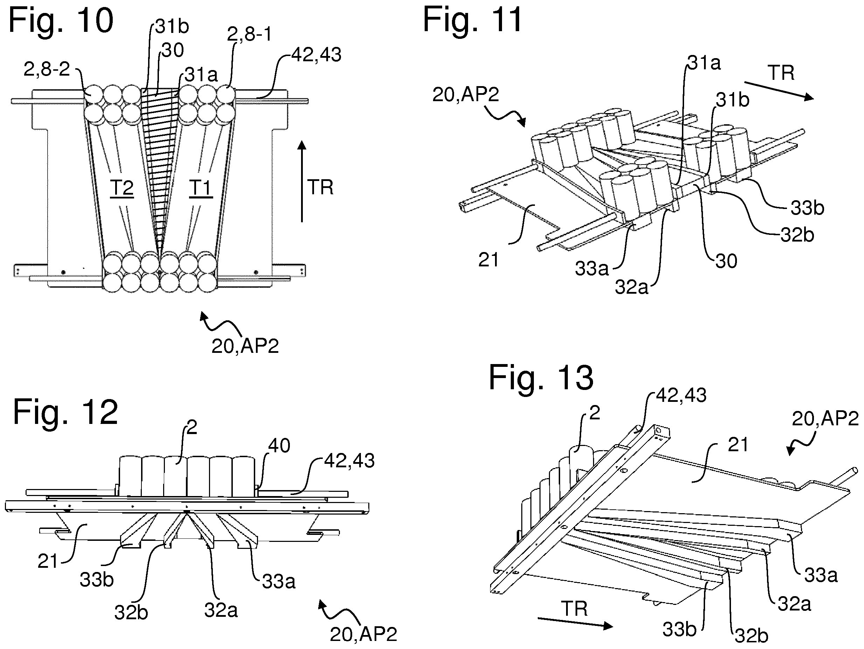

Die Figuren 10 bis 13 zeigen verschiedene perspektivische Darstellungen einer Überschubanordnung 20 in einer zweiten Arbeitsposition AP2. Hierbei sind das mittige innere Führungselement 30 und die beidseitig daran angrenzenden Führungselemente 31a, 31b zumindest bereichsweise oberhalb der Überschubplatte angeordnet, während die restlichen inneren Führungselemente 32a, 32b und 33a, 33b zumindest bereichsweise unterhalb der Überschubplatte 21 versenkt angeordnet sind. Die angehobenen inneren Führungselemente 30, 31a, 31b sind in Fig. 10 vermittels einer Schraffur hervorgehoben gekennzeichnet. Insbesondere bilden die Oberseiten der versenkten inneren Führungselemente 32a, 32b und 33a, 33b zusammen mit der Oberseite der Überschubplatte 21 eine erste Transportbahn TB1 und eine zweite Transportbahn TB2, die durch die nicht versenkten mittigen inneren Führungselemente 30, 31a, 31b voneinander getrennt und insbesondere auseinanderführend ausgebildet sind. Dadurch werden die einkommenden Artikel 2 in zwei Artikelströme 8-1, 8-2 aufgetrennt und weitergeführt.

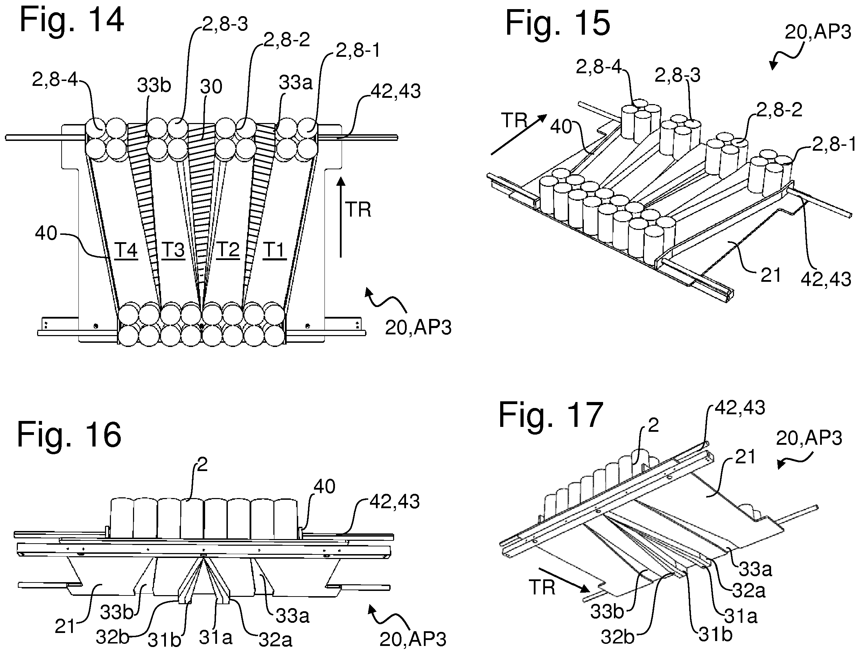

Die Figuren 14 bis 17 zeigen verschiedene perspektivische Darstellungen einer Überschubanordnung 20 in einer dritten Arbeitsposition AP3. Hierbei sind das mittige innere Führungselement 30 und die beabstandeten inneren Führungselemente 33a, 33b zumindest bereichsweise oberhalb der Überschubplatte 21 angeordnet, während die an das mittlere innere Führungselement 30 direkt angrenzenden inneren Führungselemente 31a, 31b und die wiederum an diese grenzenden inneren Führungselemente 32a, 3b zumindest bereichsweise unterhalb der Überschubplatte 21 versenkt angeordnet sind. Die angehobenen inneren Führungselemente 30, 33a, 33b sind in Fig. 14 vermittels einer Schraffur hervorgehoben gekennzeichnet Insbesondere bilden die Oberseiten der versenkten inneren Führungselemente 31a, 31b, 32a, 32b zusammen mit der Oberseite der Überschubplatte 21 eine zweite Transportbahn T2 und eine dritte Transportbahn T3, die durch das nicht versenkte mittige innere Führungselement 30 voneinander getrennt und insbesondere auseinanderführend ausgebildet sind. Weiterhin bilden die Oberseite zwischen den zumindest bereichsweise oberhalb der Überschubplatte 21 angeordneten, beabstandeten inneren Führungselementen 33a, 33b und den äußeren Führungen 40 eine erste Transportbahn T1 und eine vierte Transportbahn T4. Vermittels einer derart ausgebildeten Überschubanordnung können die einlaufenden Artikel 2 in vier Artikelströme 8-1, 8-2, 8-3 und 8-4 aufgetrennt werden.

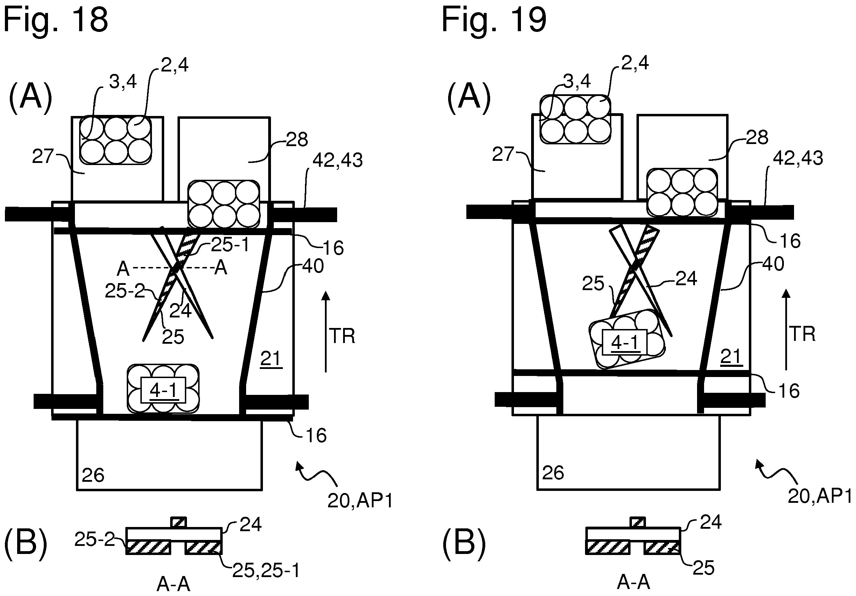

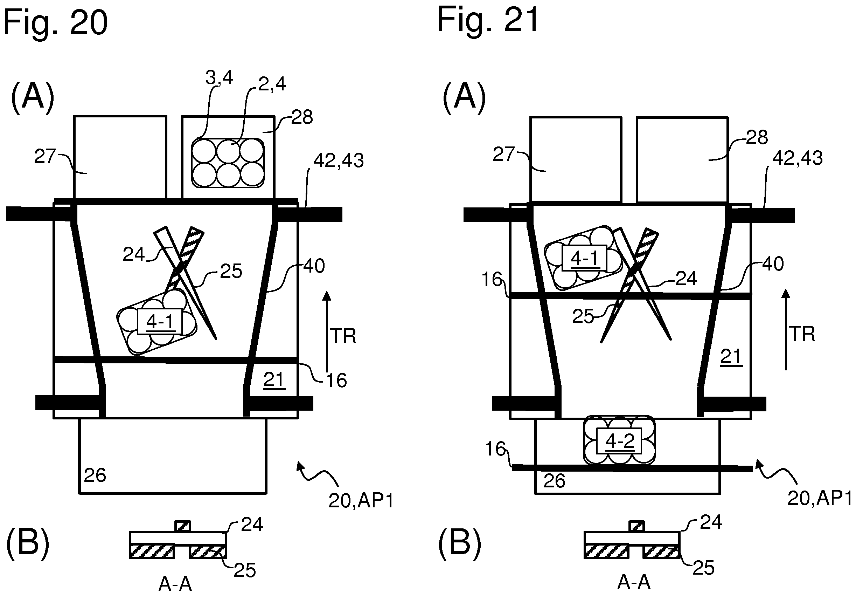

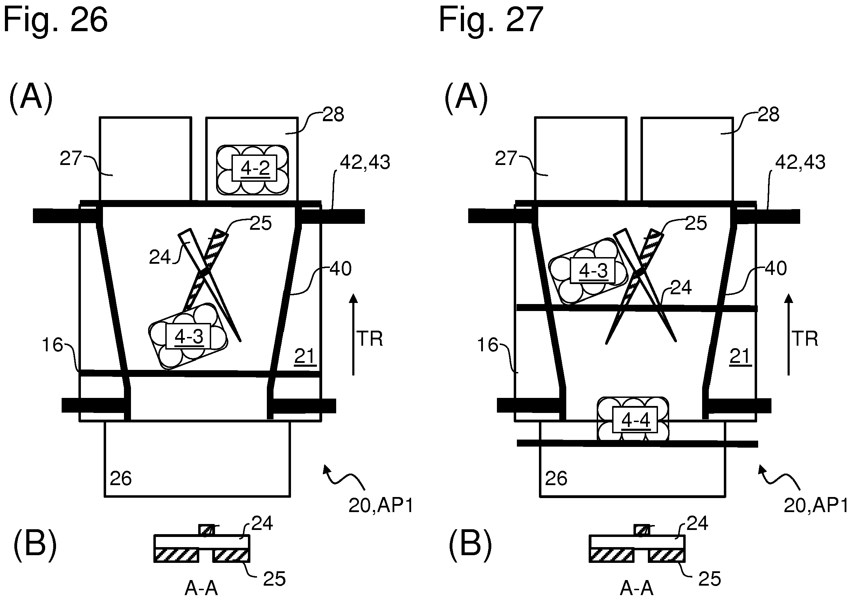

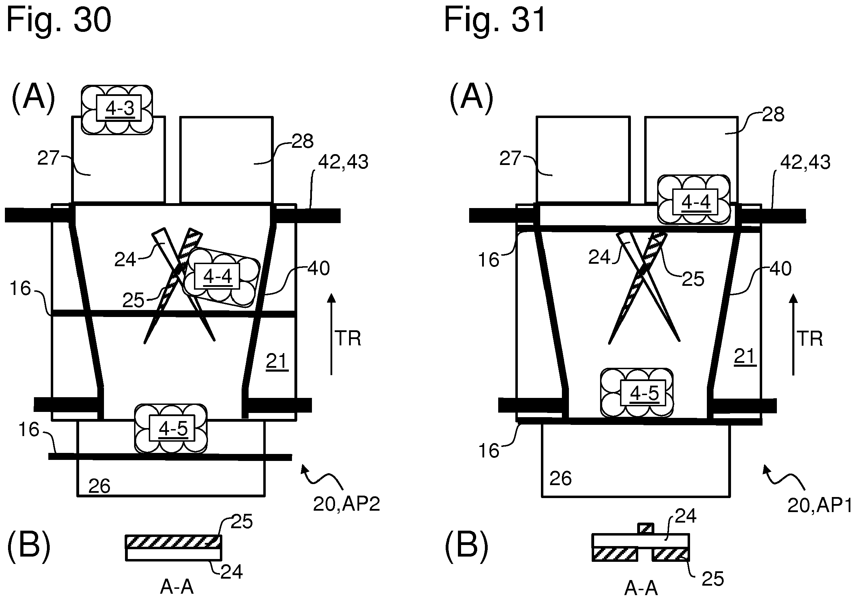

Die Figuren 18 bis 31 zeigen schematisch einen Ablauf beim Aufteilen von Gebinden 4 vermittels eines erfindungsgemäßen Transportabschnitts bzw. einer Überschubanordnung 20 mit zwei versenkbaren Spreizkeilen 24, 25. Die jeweils oben befindlichen Figuren (A) zeigen jeweils eine Draufsicht auf die Überschubanordnung 20 von oben. Die jeweils darunter befindlichen Figuren (B) zeigen jeweils einen Querschnitt durch die Spreizkeile 24, 25 im Bereich der nur in Fig. 18A dargestellten Schnittlinie A-A und verdeutlicht somit eine relative vertikale Anordnung der Spreizkeile 24, 25.

Die Gebinde 4 bestehen hierbei jeweils aus sechs mit einer Schrumpffolie 3 umhüllten Artikeln 2, beispielsweise Getränkebehältern. Die Gebinde 4 laufen über ein Förderband 26 in die Überschubanordnung 20 ein und werden durch hinter den Gebinden 4 eintauchende Schubstangen 16 in Transportrichtung TR über die Überschubplatte 21 gleitend befördert. Dabei werden sie in Abhängigkeit von der Anordnung der Spreizkeile 24, 25 jeweils in Richtung von einer der beiden abführenden Transportbahnen 27, 28 abgelenkt und dieser jeweils zugeführt. Insbesondere bestimmt die Anordnung der Spreizkeile 24, 25 somit eine Zuordnung der Gebinde zu einer abführenden Transportbahn 27, 28.

Der Spreizkeil 25 ist mehrteilig aufgebaut. Insbesondere können die einzelnen Segmente 25-1 und 25-2 des Spreizkeils 25 einzeln und/oder unabhängig voneinander versenkt bzw. angehoben werden, so dass die beiden Spreizkeile 24, 25 einzeln und/oder unabhängig voneinander versenkt in einer mit entsprechenden Ausnehmungen (nicht dargestellt) ausgestatteten Überschubplatte 21 bzw. angehoben zu dieser angeordnet werden können.

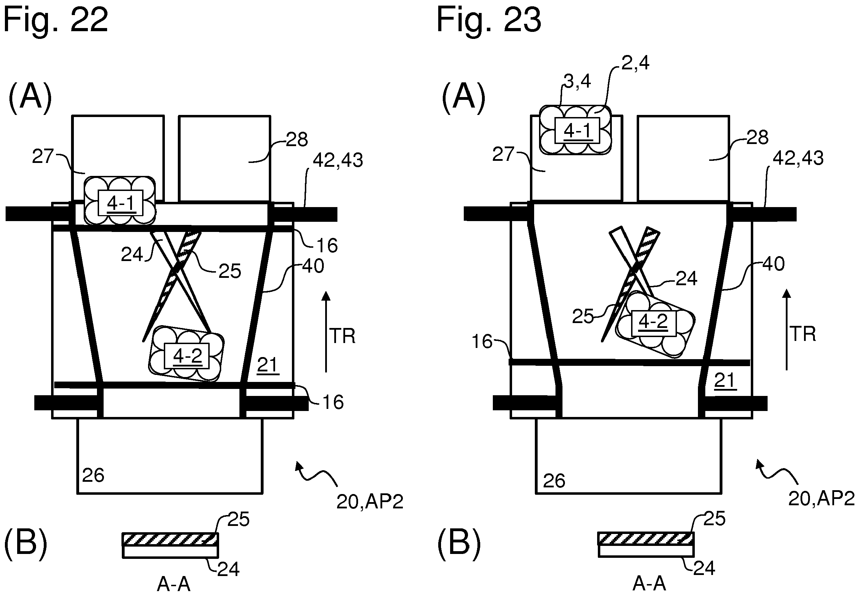

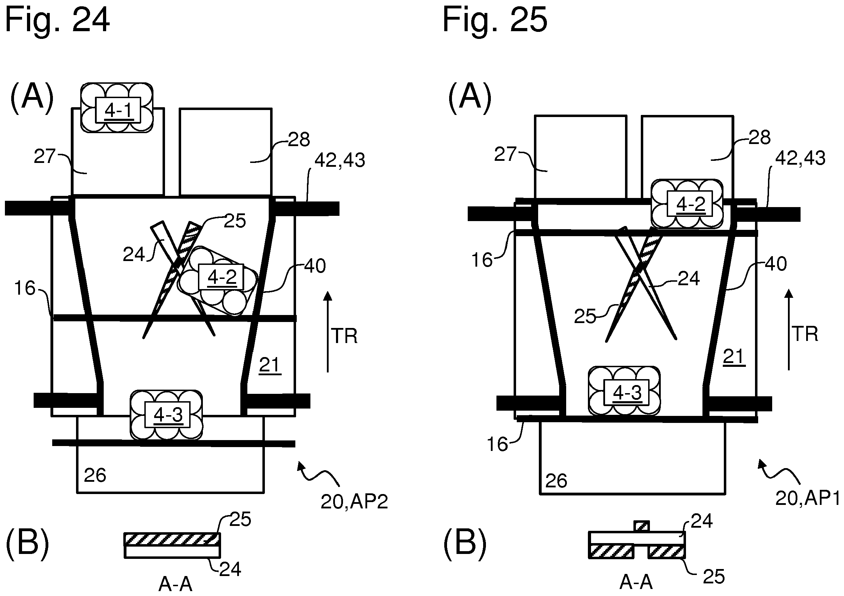

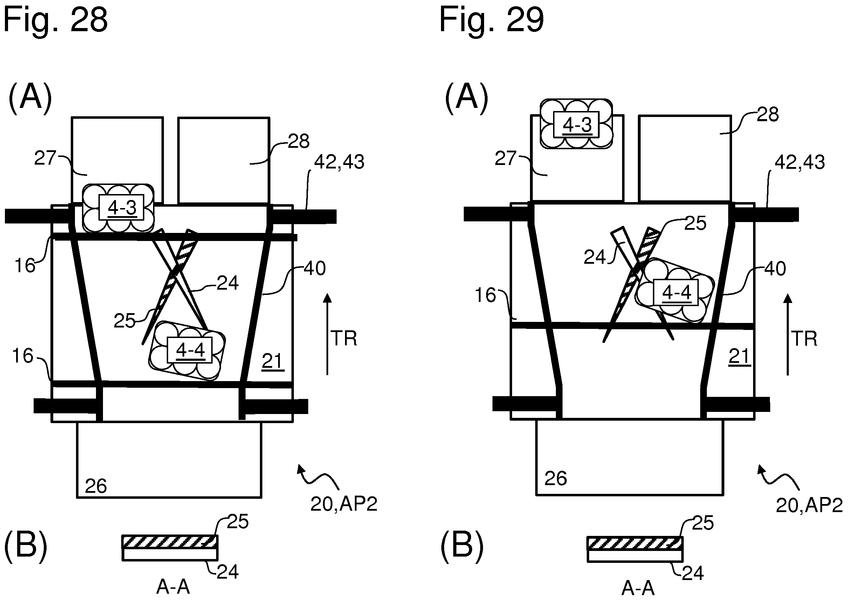

Gemäß den Figuren 18 bis 21 ist in einer ersten Arbeitsposition AP1 der Spreizkeil 25 versenkt angeordnet und bildet mit der Überschubplatte 21 eine gemeinsame Oberfläche. Dagegen ist der Spreizkeil 24 zumindest bereichsweise oberhalb der Überschubplatte angeordnet und bildet eine Führung für das vermittels der Schubstange 16 angeschobene Gebinde 4-1 (Fig. 19), dass dadurch in Richtung der linken Transportbahn 27 geleitet wird. Während sich das Gebinde 4-1 im Auslaufbereich zur Transportbahn 27 befindet und ein weiteres Gebinde 4-2 über das Förderband 26 zugeführt wird (Fig. 22), werden die Spreizkeile 24, 25 verstellt, so dass in einer zweiten Arbeitsposition AP2 nunmehr der Spreizkeil 24 versenkt angeordnet ist, während der Spreizkeil 25 oberhalb der Überschubplatte die Führung für das vermittels einer weiteren Schubstange 16 angetriebene Gebinde 4-2 bildet, dass dadurch in Richtung der rechten abführenden Transportbahn 28 geleitet wird (Figuren 22 bis 24). Anschließend erfolgt wiederum eine Umstellung der Spreizkeile 24, 25, um das nachfolgende Gebinde 4-3 wiederum in die linke Transportbahn 27 zu leiten (Figuren 25 bis 27). Durch eine erneute Umstellung der Spreizkeile 24, 25 wird das Gebinde 4-4 der rechten Transportbahn 28 zugeleitet (Figuren 28 bis 30) usw.

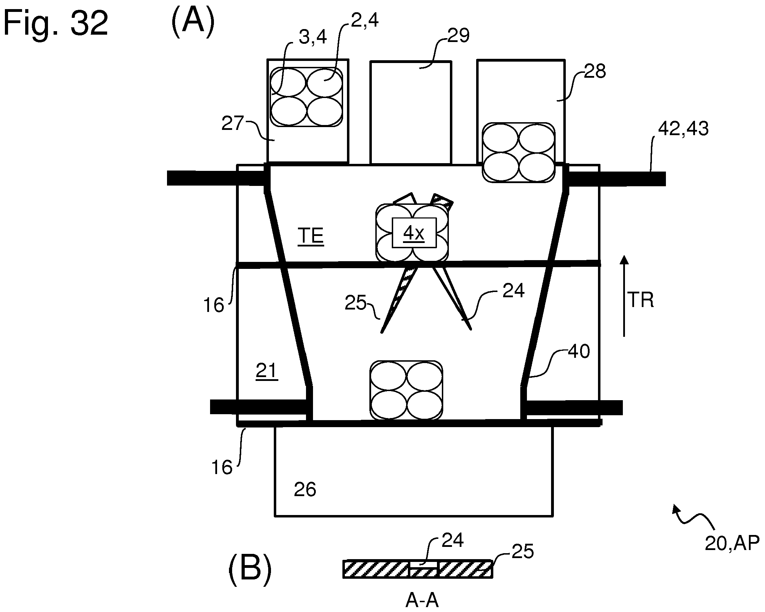

Die Fig. 32 zeigt die Verwendung eines Transportabschnitts gemäß Figuren 18 bis 31 zum Aufteilen von Gebinden 9 in drei abgehende Transportbahnen 27, 28, 29. Während bei der Aufteilung in zwei nachfolgende Transportbahnen 27, 28 entsprechend den Figuren 18 bis 31 immer einer der beiden Spreizkeile 24 oder 25 versenkt inner- und unterhalb der Überschubplatte 21 angeordnet ist, während der andere Spreizkeil 25 oder 24 zumindest bereichsweise oberhalb der Überschubplatte 21 angeordnet ist, um eine Führung für das jeweilig aufzuteilende Gebinde 4 zu bilden, sind in einer in Fig. 32 dargestellten Arbeitsposition AP beide Spreizkeile 24, 25 versenkt angeordnet und bilden mit der Überschubplatte 21 eine gemeinsame Transportebene TE. In diesem Fall werden die mittig einlaufenden Gebinde 4x durch die Schubstange 16 parallel zur Transportrichtung TR durch die Überschubanordnung 20 in die mittig angeordnete Transportbahn 29 befördert. Gemäß einer Ausführungsform kann ein solcher Transportabschnitt im Zusammenhang mit vorgelagerten, beispielsweise dem zuführenden Förderband 26 zugeordneten, Sensoren verwendet werden, um fehlerhafte Gebinde aus einem Gebindestrom auszuschleusen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen. Es ist möglich, einige der Komponenten oder Merkmale eines der Beispiele in Kombination mit Merkmalen oder Komponenten eines anderen Beispiels anzuwenden.

### Bezugszeichenliste

- 1: Verpackungsanlage
- 2: Artikel
- 3: Schrumpffolie
- 4, 4-1, 4-2, 4-3, 4-4, 4x: Gebinde
- 5: Zusammenstellung, Artikelzusammenstellung
- 6: Artikelreihe, Reihe
- 7: Artikelgruppe
- 8-1, 8-2, 8-3, 8-4: Artikelstrom
- 10: Artikelzuführung
- 11: Förderband
- 13: Einteiler
- 14: Förderband
- 16: Schubstange
- 17: Überschubmodul
- 18: Folieneinschlagmodul
- 19: Förderband
- 20: Überschubanordnung
- 21: Überschubplatte
- 24: Spreizkeil
- 25: Spreizkeil
- 25-1, 25-2: Segment
- 26: Förderband
- 27: Transportbahn
- 28: Transportbahn
- 29: Transportbahn
- 30: inneres Führungselement
- 31a, 31b: inneres Führungselement
- 32a, 32b: inneres Führungselement
- 33a, 33b: beabstandetes inneres Führungselement
- 40: äußeres Führungselement
- 42: Verstellmittel
- 43: Verstellspindel
- 50: erste Ausnehmung
- 53a, 53b: zweite Ausnehmung
- 90: Schubketten

- A40: Abstand
- AP: Arbeitsposition
- AP1: erste Arbeitsposition
- AP2: zweite Arbeitsposition
- AP3: dritte Arbeitsposition
- B30, B31, B32: Zwischenspurbreite
- TB: Transportbahn
- T1 / T2 / T3 / T4: Erste / zweite / dritte / vierte Transportbahn
- TE: Transportebene
- TR: Transportrichtung

## Patentansprüche

1. Transportabschnitt zur Zuführung von Artikeln (2) oder Artikelzusammenstellungen (5) in einer Transportrichtung (TR) zu einer Verarbeitungsvorrichtung für die Artikel (2) oder Artikelzusammenstellungen (5), welcher Transportabschnitt zumindest umfasst:
- eine Überschubplatte (21) mit einer Transportfläche, auf der die Artikel (2) oder der Artikelzusammenstellungen (5) in Transportrichtung (TR) gleitend beweglich sind;
- mindestens ein Antriebsmittel für die Artikel (2) oder Artikelzusammenstellungen (5);
- mindestens zwei auf der Überschubplatte (21) angeordnete, den Transportabschnitt seitlich begrenzende äußere Führungselemente (40);
- und mindestens ein die Überschubplatte (21) zumindest teilweise durchgreifendes inneres Führungselement (30) mit einer planen Oberseite, welches mindestens eine innere Führungselement (30) vertikalbeweglich ausgebildet ist, **dadurch gekennzeichnet, dass** das mindestens eine innere Führungselement (30) in einer ersten Arbeitsposition (AP1) derart angeordnet ist, dass die plane Oberseite des mindestens einen inneren Führungselementes (30) und die Transportfläche der Überschubplatte (21) in einer Ebene angeordnet sind und/oder einen Teil der Transportfläche bilden; und dass das mindestens eine innere Führungselement (30) in einer zweiten Arbeitsposition (AP2) zumindest teilweise oberhalb der Transportfläche der Überschubplatte (21) angeordnet ist.

2. Transportabschnitt nach Anspruch 1, wobei das mindestens eine innere Führungselement (30) eine sich in Transportrichtung (TR) verbreiternde Keilform aufweist.

3. Transportabschnitt nach Anspruch 1 oder 2, wobei die Überschubplatte (21) mindestens eine Ausnehmung (50) aufweist, wobei die mindestens eine Ausnehmung (50) die Form der Oberseite des mindestens einen inneren Führungselementes (30) nachbildet.

4. Transportabschnitt nach einem der voranstehenden Ansprüche, wobei der Transportabschnitt eine Mehrzahl von insbesondere voneinander beabstandeten inneren Führungselementen aufweist, insbesondere eine ungerade Anzahl von inneren Führungselementen (30).

5. Transportabschnitt nach Anspruch 4, wobei ein mittig angeordnetes inneres Führungselement (30) eine sich in Transportrichtung (TR) verbreiternde Keilform aufweist, und wobei die weiteren inneren Führungselemente seitlich zu dem mittig angeordneten Führungselement (30) angeordnet sind und ebenfalls eine sich in Transportrichtung (TR) verbreiternde Keilform aufweisen.

6. Transportabschnitt nach Anspruch 4 oder 5, wobei mindestens zwei innere Führungselemente beidseitig angrenzend an das mittige innere Führungselement (30) angeordnet sind, und wobei mindestens zwei Führungselemente beabstandet zu dem mittigen inneren Führungselement (30) und beabstandet zu den an das mittige innere Führungselement (30) angrenzenden inneren Führungselementen ausgebildet sind.

7. Transportabschnitt nach Anspruch 6, wobei in einer ersten Arbeitsposition (AP1) alle inneren Führungselemente derart angeordnet sind, dass die Oberseite der Führungselemente und die Transportfläche der Überschubplatte (21) in einer Ebene angeordnet sind.

8. Transportabschnitt nach Anspruch 6, wobei in einer zweiten Arbeitsposition (AP2) das mittig angeordnete innere Führungselement (30) zumindest teilweise oberhalb der Transportfläche der Überschubplatte (21) angeordnet ist, während die seitlich beabstandet angeordneten inneren Führungselemente derart angeordnet sind, dass die Oberseite der beabstandet angeordneten inneren Führungselemente und die Transportfläche der Überschubplatte (21) in einer Ebene angeordnet sind, oder wobei in einer zweiten Arbeitsposition (AP2) das mittig angeordnetes Führungselement (30) und beidseitig an das Führungselement angrenzende weitere innere Führungselemente zumindest teilweise oberhalb der Transportfläche der Überschubplatte (21) angeordnet ist, während die beabstandet angeordneten inneren Führungselemente derart angeordnet sind, dass die Oberseite der Führungselemente und die Transportfläche der Überschubplatte (21) in einer Ebene angeordnet sind.

9. Transportabschnitt nach Anspruch 6, wobei in einer dritten Arbeitsposition (AP3) das mittig angeordnetes Führungselement (30) und mindestens zwei der beabstandeten inneren Führungselemente beidseitig zu dem mittigen inneren Führungselement (30) zumindest teilweise oberhalb der Transportfläche der Überschubplatte (21) angeordnet sind, während die weiteren inneren Führungselemente derart angeordnet sind, dass die Oberseite der Führungselemente und die Transportfläche der Überschubplatte (21) in einer Ebene angeordnet sind oder wobei in einer zweiten Arbeitsposition (AP2) das mittig angeordnete Führungselement, beidseitig an das Führungselement angrenzende weitere innere Führungselemente und mindestens zwei der beabstandeten inneren Führungselemente beidseitig zu dem mittigen inneren Führungselement zumindest teilweise oberhalb der Transportfläche der Überschubplatte (21) angeordnet sind.

10. Transportabschnitt nach einem der Ansprüche 1 bis 4, wobei der Transportabschnitt zwei winklig zueinander und winklig zur Transportrichtung (TR) angeordnete innere Führungselemente aufweist.

11. Transportabschnitt nach Anspruch 10, wobei mindestens eines der beiden Führungselemente geteilt ausgeführt ist, insbesondere segmentiert, wobei die Segmente einzeln hochgefahren oder abgesenkt werden können.

12. Verfahren zum Einstellen und/oder Verstellen mindestens einer Transportbahn (TB) innerhalb eines Transportabschnitts gemäß einem der Ansprüche 1 bis 11 zur Zuführung von Artikeln (2) oder Artikelzusammenstellungen (5) in einer Transportrichtung (TR) zu einer Verarbeitungsvorrichtung für die Artikel (2) oder Artikelzusammenstellungen (5), wobei die Artikel (2) oder Artikelzusammenstellungen (5) innerhalb des Transportabschnitts in Transportrichtung (TR) auf einer Überschubplatte (21) gleitend bewegt werden, wobei zur Einstellung der mindestens einen Transportbahn (TB) mindestens ein der Überschubplatte (21) zugeordnetes inneres Führungselement (30) durch eine vertikale Bewegung in der Überschubplatte (21) versenkt oder zumindest bereichsweise oberhalb der Überschubplatte (21) angeordnet wird, **dadurch gekennzeichnet, dass** das mindestens eine innere Führungselement (30) in einer ersten Arbeitsposition (AP1) derart angeordnet wird, dass die plane Oberseite des mindestens einen inneren Führungselementes (30) und die Transportfläche der Überschubplatte (21) in einer Ebene angeordnet sind und/oder einen Teil der Transportfläche bilden; und dass das mindestens eine innere Führungselement (30) in einer zweiten Arbeitsposition (AP2) zumindest teilweise oberhalb der Transportfläche der Überschubplatte (21) angeordnet ist.

13. Verpackungsanlage (1) für Artikel (2) oder Artikelzusammenstellungen (5) mit einer Gruppiereinheit zum Zusammenstellen der Artikel (2) und einer Verarbeitungsvorrichtung, insbesondere einem Verpackungsmodul, wobei die Gruppiereinheit einen Transportabschnitt zur Zuführung von Artikelzusammenstellungen (5) in einer Transportrichtung (TR) zu dem Verpackungsmodul gemäß einem der Ansprüche 1 bis 11 umfasst oder wobei nach einer Gruppiereinheit zum Zusammenstellen von Artikeln (2) zu Artikelzusammenstellungen (5) und einem Verpackungsmodul für die Artikelzusammenstellungen (5) ein Transportabschnitt zur Aufteilung der gebildeten Artikelzusammenstellungen (5) gemäß einem der Ansprüche 1 bis 11 angeordnet ist.

## Claims

1. A transport section for feeding articles (2) or article assemblies (5) in a transport direction (TR) to a processing apparatus for the articles (2) or article assemblies (5), the transport section comprising at least:
- a transfer plate (21) with a transport surface, on which transport surface the articles (2) or article assemblies (5) are slidably movable in the transport direction (TR);
- at least one drive means for the articles (2) or article assemblies (5);
- at least two outer guide elements (40) arranged on the transfer plate (21) and laterally delimiting the transport section;
- and at least one inner guide element (30), which inner guide element (30) at least partially engages through the transfer plate (21) and has a planar upper side, which at least one inner guide element (30) is designed such that it can move vertically, **characterized in that** the at least one inner guide element (30) is arranged in a first working position (AP1) in such a way that the planar upper side of the at least one inner guide element (30) and the transport surface of the transfer plate (21) are arranged within a plane and/or form part of the transport surface; and that the at least one inner guide element (30) is arranged in a second working position (AP2) at least partially above the transport surface of the transfer plate (21).

2. The transport section according to claim 1, wherein the at least one inner guide element (30) features a wedge shape widening in the transport direction (TR).

3. The transport section according to claim 1 or 2, wherein said transfer plate (21) comprises at least one recess (50), said at least one recess (50) replicating the shape of the upper surface of said at least one inner guide element (30).

4. The transport section according to one of the preceding claims, wherein the transport section has a plurality of inner guide elements, in particular spaced apart from one another, in particular an odd number of inner guide elements (30).

5. The transport section according to claim 4, wherein a centrally arranged inner guide element (30) features a wedge shape widening in the transport direction (TR), and wherein the further inner guide elements (30) are arranged laterally to the centrally arranged guide element (30) and also feature a wedge shape widening in the transport direction (TR).

6. The transport section according to claim 4 or 5, wherein at least two inner guide elements are arranged adjacent to the central inner guide element (30) on both sides, and wherein at least two guide elements are formed spaced apart from the central inner guide element (30) and spaced apart from the inner guide elements adjacent to the central inner guide element (30).

7. The transport section according to claim 6, wherein in a first working position (AP1) all inner guide elements are arranged in such a way that the upper side of the guide elements and the transport surface of the transfer plate (21) are arranged in one plane.

8. The transport section according to claim 6, wherein in a second working position (AP2) the centrally arranged inner guide element (30) is arranged at least partially above the transport surface of the transfer plate (21), while the laterally spaced inner guide elements are arranged in such a way that the upper side of the spaced inner guide elements and the transport surface of the transfer plate (21) are arranged in one plane, or wherein, in a second working position (AP2), the centrally arranged guide element (30) and further inner guide elements adjoining the guide element on both sides are arranged at least partially above the transport surface of the transfer plate (21), while the spaced-apart inner guide elements are arranged in such a way that the upper side of the guide elements and the transport surface of the transfer plate (21) are arranged in one plane.

9. The transport section according to claim 6, wherein in a third working position (AP3) the centrally arranged guide element (30) and at least two of the spaced inner guide elements, which are arranged on both sides of the central inner guide element (30), are at least partially above the transport surface of the transfer plate (21), while the further inner guide elements are arranged in such a way, that the upper side of the guide elements and the transport surface of the transfer plate (21) are arranged in one plane or wherein, in a second working position (AP2), the centrally arranged guide element, further inner guide elements adjoining the guide element on both sides and at least two of the spaced inner guide elements are arranged on both sides of the central inner guide element at least partially above the transport surface of the transfer plate (21).

10. The transport section according to one of the claims 1 to 4, wherein the transport section has two inner guide elements arranged at an angle to each other and at an angle to the transport direction (TR).

11. The transport section according to claim 10, wherein at least one of the two guide elements is of a divided design, in particular segmented, wherein the segments can be raised or lowered individually.

12. A method for configuring and/or adjusting at least one transport path (TB) within a transport section according to one of the claims 1 to 11 for feeding articles (2) or article assemblies (5) in a transport direction (TR) to a processing device for the articles (2) or article assemblies (5), wherein the articles (2) or article assemblies (5) are slidably moved within the transport section in the transport direction (TR) on a transfer plate (21), wherein, in order to configure the at least one transport path (TB), at least one inner guide element (30) associated with the transfer plate (21) is lowered into the transfer plate (21) by a vertical movement or is arranged at least in regions above the transfer plate (21), **characterized in that** the at least one inner guide element (30) is arranged in a first working position (AP1) in such a way that the plane upper side of the at least one inner guide element (30) and the transport surface of the transfer plate (21) are arranged in one plane and/or form a part of the transport surface; and that the at least one inner guide element (30) is arranged in a second working position (AP2) at least partially above the transport surface of the transfer plate (21).

13. A packaging device (1) for articles (2) or article assemblies (5) with a grouping unit for assembling the articles (2) and a processing device, in particular a packaging module, wherein the grouping unit comprises a transport section for feeding article assemblies (5) in a transport direction (TR) to the packaging module according to one of the claims 1 to 11 or wherein after a grouping unit for assembling articles (2) into article assemblies (5) and a packaging module for the article assemblies (5) a transport section according to one of the claims 1 to 11 is arranged for dividing the formed article assemblies (5).

## Revendications

1. Section de transport destinée à amener des articles (2) ou des ensembles d'articles (5) dans une direction de transport (TR) à un dispositif de traitement pour les articles (2) ou les ensembles d'articles (5), laquelle section de transport comprend au moins:
- une plaque de transfert par poussée (21) comprenant une surface de transport sur laquelle les articles (2) ou les ensembles d'articles (5) sont déplaçables de manière coulissante dans la direction de transport (TR);
- au moins un moyen d'entraînement pour les articles (2) ou les ensembles d'articles (5);
- au moins deux éléments de guidage extérieurs (40) disposés sur la plaque de transfert par poussée (21) et délimitant latéralement la section de transport;
- et au moins un élément de guidage intérieur (30) qui s'étend au moins en partie à travers la plaque de transfert par poussée (21) et présente une face supérieure plane, lequel au moins un élément de guidage intérieur (30) est conçu de manière à être mobile verticalement, **caractérisée par le fait que** ledit au moins un élément de guidage intérieur (30) est agencé dans une première position de travail (AP1) de telle sorte que la face supérieure plane dudit au moins un élément de guidage intérieur (30) et la surface de transport de la plaque de transfert par poussée (21) sont disposées dans un plan et/ou forment une partie de la surface de transport; et que ledit au moins un élément de guidage intérieur (30) est disposé, dans une deuxième position de travail (AP2), au moins en partie au-dessus de la surface de transport de la plaque de transfert par poussée (21).

2. Section de transport selon la revendication 1, dans laquelle ledit au moins un élément de guidage intérieur (30) présente une forme de coin qui s'élargit dans la direction de transport (TR).

3. Section de transport selon la revendication 1 ou 2, dans laquelle la plaque de transfert par poussée (21) présente au moins un évidement (50), dans lequel ledit au moins un évidement (50) simule la forme de la face supérieure dudit au moins un élément de guidage intérieur (30).

4. Section de transport selon l'une quelconque des revendications précédentes, dans laquelle la section de transport comprend une pluralité d'éléments de guidage intérieurs, en particulier espacés les uns des autres, en particulier un nombre impair d'éléments de guidage intérieurs (30).

5. Section de transport selon la revendication 4, dans laquelle un élément de guidage intérieur (30) disposé au centre présente une forme de coin qui s'élargit dans la direction de transport (TR), et dans lequel les autres éléments de guidage intérieurs sont disposés latéralement à l'élément de guidage (30) disposé au centre et présentent eux aussi une forme de coin s'élargissant dans la direction de transport (TR).

6. Section de transport selon la revendication 4 ou 5, dans laquelle au moins deux éléments de guidage intérieurs sont agencés de manière contiguë de part et d'autre de l'élément de guidage intérieur (30) central, et dans lequel au moins deux éléments de guidage sont conçus de manière à être espacés de l'élément de guidage intérieur (30) central et espacés des éléments de guidage intérieurs adjacents à l'élément de guidage intérieur (30) central.

7. Section de transport selon la revendication 6, dans laquelle, dans une première position de travail (AP1), tous les éléments de guidage intérieurs sont agencés de telle sorte que la face supérieure des éléments de guidage et la surface de transport de la plaque de transfert par poussée (21) sont agencées dans un plan.

8. Section de transport selon la revendication 6, dans laquelle, dans une deuxième position de travail (AP2), l'élément de guidage intérieur (30) disposé au centre est disposé au moins en partie au-dessus de la surface de transport de la plaque de transfert par poussée (21), tandis que les éléments de guidage intérieurs espacés latéralement sont agencés de telle sorte que la face supérieure des éléments de guidage intérieurs disposés à distance et la surface de transport de la plaque de transfert par poussée (21) sont disposés dans un plan, ou dans laquelle, dans une deuxième position de travail (AP2), l'élément de guidage (30) disposé au centre et d'autres éléments de guidage intérieurs adjacents de part et d'autre à l'élément de guidage sont agencés au moins en partie au-dessus de la surface de transport de la plaque de transfert par poussée (21), tandis que les éléments de guidage intérieurs disposés à distance sont agencés de telle sorte que la face supérieure des éléments de guidage et la surface de transport de la plaque de transfert par poussée (21) sont agencées dans un plan.

9. Section de transport selon la revendication 6, dans laquelle, dans une troisième position de travail (AP3), l'élément de guidage (30) disposé au centre et au moins deux des éléments de guidage intérieurs espacés situés de part et d'autre de l'élément de guidage intérieur central (30) sont disposés au moins en partie au-dessus de la surface de transport de la plaque de transfert par poussée (21), tandis que les autres éléments de guidage intérieurs sont disposés de telle sorte que la face supérieure des éléments de guidage et la surface de transport de la plaque de transfert par poussée (21) sont disposées dans un plan, ou dans laquelle, dans une deuxième position de travail (AP2), l'élément de guidage disposé au centre, d'autres éléments de guidage intérieurs adjacents de part et d'autre à l'élément de guidage et au moins deux des éléments de guidage intérieurs espacés situés de part et d'autre de l'élément de guidage intérieur central sont disposés au moins en partie au-dessus de la surface de transport de la plaque de transfert par poussée (21).

10. Section de transport selon l'une quelconque des revendications 1 à 4, dans laquelle la section de transport comprend deux éléments de guidage intérieurs disposés angulairement l'un par rapport à l'autre et angulairement par rapport à la direction de transport (TR).

11. Section de transport selon la revendication 10, dans laquelle au moins l'un des deux éléments de guidage est conçu de manière divisée, en particulier segmentée, dans laquelle les segments peuvent être relevés ou abaissés individuellement.

12. Procédé d'ajustage et/ou de réglage d'au moins une voie de transport (TB) à l'intérieur d'une section de transport selon l'une quelconque des revendications 1 à 11, pour amener des d'articles (2) ou des ensembles d'articles (5) dans une direction de transport (TR) à un dispositif de traitement pour les articles (2) ou les ensembles d'articles (5), dans lequel les articles (2) ou les ensembles d'articles (5) sont déplacés de manière coulissante à l'intérieur de la section de transport dans la direction de transport (TR) sur une plaque de transfert par poussée (21), dans lequel, pour ajuster ladite au moins une voie de transport, au moins un élément de guidage intérieur (30) associé à la plaque de transfert par poussée (21) est immergé par un mouvement vertical dans la plaque de transfert par poussée (21) ou est disposé au moins par zones au-dessus de la plaque de transfert par poussée (21), **caractérisé par le fait que** ledit au moins un élément de guidage intérieur (30) est disposé dans une première position de travail (AP1) de telle manière que la face supérieure plane dudit au moins un élément de guidage intérieur (30) et la surface de transport de la plaque de transfert par poussée (21) sont disposées dans un plan et/ou forment une partie de la surface de transport; et que ledit au moins un élément de guidage intérieur (30) est disposé, dans une deuxième position de travail (AP2), au moins en partie au-dessus de la surface de transport de la plaque de transfert par poussée (21).

13. Installation d'emballage (1) pour des articles (2) ou ensembles d'articles (5), comprenant une unité de groupement pour réunir les articles (2) ainsi qu'un dispositif de traitement, en particulier un module d'emballage, dans laquelle ladite unité de groupement comprend une section de transport pour amener des ensembles d'articles (5) dans une direction de transport (TR) au module d'emballage, selon l'une quelconque des revendications 1 à 11, ou dans laquelle en aval d'une unité de groupement destiné à réunir des articles (2) pour former des ensembles d'articles (5) et d'un module d'emballage pour les ensembles d'articles (5) est disposée une section de transport pour diviser les ensembles d'articles (5) formés, selon l'une quelconque des revendications 1 à 11.
